# EUROPEAN PATENT APPLICATION

(11) **EP 3 982 315 A1**
(43) Date of publication of application: **13.04.2022**
(21) Application number: 20200913.0
(22) Date of filing: 08.10.2020
(51) Int. Cl.: G06Q 10/10

(54) **COMPUTER SYSTEM AND METHOD FOR AUTOMATIC AND SECURED PROCESSING OF AN APPROVAL REQUEST**

(71) Applicant: Atos Belgium, 1930 Zaventem (BE)
(72) Inventor: DE WEVER, Marc, 8310 Assebroek (BE)
(74) Representative: Cabinet Camus Lebkiri

(57) **Abstract**

The invention relates to a method for automatic and secured processing of a request (1) comprising the steps of:
- receiving (100) an approval request (AR1) of a current project plan encoding an identifier and intelligible data;
- identifying (200):
• the identifier and determining related security data,
• the intelligible data and determining, a required security level;

- identifying computer device authorizers (300) regarding the identifier and the intelligible data;
- generating (500) an approval notification (AN) and sending said approval notification to identified authorizer computer device (40);
- calculating (550) an approval score based on a response message (MR1, MR2) to the approval notification (AN) sent to the identified authorizer computer device (40),
- updating (600) the approval request (AR1) and sending an updated approval request (AR2) to the third-party computer device (30) if the approval score previously calculated is greater than or equal to a predetermined threshold.

## Description

### Field of the invention

The present invention relates to the field of data processing systems or methods, especially adapted for administrative and managerial purposes and particularly document generations. More particularly, the invention relates to a new method for providing automated and secured processing of an approval request.

### Description of Related Art

Companies and other organizations often have diverse business needs, with one of the most important aspects of company management often relating to sales and business development processes. This complex practice typically includes many tangible and intangible variables, which tend to range from ensuring that transactions are competitively initiated to effectively delivering on promises. Properly managing these and other variables to create effective business development practises can often be disjointed, for example, because employees, consultants, partners, customers, and others involved in business development pipeline management need access to specific data that tends to be stored in disparate departments and information repositories when responding to a product or service solicitation, generally referred to as a "Request For Proposals". Moreover, such requests often comprise business data which may be confidential, or at least access to which is only allowed to employees with specific authorizations.

When an employee needs to initiate a project pursuant to a potential customer's solicitation for products, services, or other work, the employee generally generates a Request for Proposal, Request for Information, or Request for Quote. In such requests, the employee may indicate details relating to performance associated with similar or related work that an enterprise performed in the past, information relating to accounts, contracts, price quotes, and other financial data associated with the company, corporate profiles, biographies, qualifications, and other capabilities that relate to whether the company can deliver what the potential customer has requested, recommendations from third parties and relationships with partners that may work collaboratively with the company, and technical specifications, estimated timelines, and proposed solution designs, among many other things. This information is critical for companies and its exchange must be secured.

Beyond request security concerns, tracking these requests may be difficult for both, the evaluation and implementation stages. Moreover, the number of proposals and the number of people who are required to review the proposals may be a hindrance to proposal management. The greater the number of people that have to evaluate a proposal, the more difficult to achieve the review in a timely and secure manner. Furthermore, as the number of new and implemented proposals grows, it may have a deleterious effect on the tracking, the security and the implementation of each individual proposal.

In a company, to make decisions, there is always more than one person to review a project proposal, which allows the company to use a range of different backgrounds and specialities to better evaluate a proposal or ongoing project. A project reviewer from one department may have a completely different view on the value of a proposal, or the continuation of an undertaking, than a reviewer from different departments; this may also hold true for reviews from geographically diverse areas as well.

In order to help managers regarding project evaluation, approval and monitoring it has been proposed in patent document US 2002/0065697, a high-level view of overall parameters of one or more submitted proposals in terms of the evaluation and tracking of new proposals and the project that results from that proposal. To that end, a proposer formulates an idea for a proposal and enters various proposal parameters into a project summary screen. Once the proposal has been submitted and stored in a final version, the proposal is frozen by the system, so that subsequent review by any number of reviewers is conducted based on the same proposal parameters. From this proposal, each reviewer can add and share comments with other reviewers, through the system. A decision is made and entered into the system. If accepted, the proposal moves forward and becomes a project. If not, the system may unfreeze the proposal and allow revision, such as receiving comments from one or more reviewers regarding the proposal parameters. The proposer may eventually be allowed to resubmit the proposal after changing the project parameters in order to incorporate the comments of the reviewers, but until that time reviewers are assured they are working with the same proposal parameters and communicating on the same level.

Unfortunately, this solution neither allows to secure communication of sensible information, neither to ease the process of communicating data to the right decision-makers computers.

Hence, there is still a need for a solution identifying key features in intelligible data and providing coordination interaction between parties through a secured dynamic workflow.

### Technical problem

The invention aims to overcome the disadvantages of the prior art. In particular, the invention proposes a method and a system for automatic and secured processing of a request, said method allowing identifying authorizers from intelligible data encoded in the request and based on an identifier encoded in said request. This method and system further allow planning a review meeting when the request does not comply with authorizer requirements based on predetermined rules and authorizer timetables.

### Summary of the invention

The following sets forth a simplified summary of selected aspects, embodiments and examples of the present invention for the purpose of providing a basic understanding of the invention. However, the summary does not constitute an extensive overview of all the aspects, embodiments and examples of the invention. The sole purpose of the summary is to present selected aspects, embodiments and examples of the invention in a concise form as an introduction to the more detailed description of the aspects, embodiments and examples of the invention that follow the summary.

Hence, according to **an aspect** of the present invention, it is provided a method for automatic and secured processing of a request, said method being implemented by a processing unit of a processing computer device including a communication module, a classification module, a management module, a data memory wherein the data memory is configured to store a security database and a rule database, said method comprising the steps of:
- receiving, by the communication module, an approval request of a current project plan sent by a third-party computer device, said approval request encoding an identifier and intelligible data;
- identifying, by the classification module:
   - the identifier encoded in the approval request and determining related security data by comparing said identifier in the security database,
   - the intelligible data in said approval request and determining, according to predetermined rules stored in the rule database, a required security level;
- identifying an authorizer computer device, by the management module, in the security database, regarding the identifier and the intelligible data;
- generating an approval notification and sending, by the communication module, said approval notification to the identified authorizer computer device:
- calculating, by the management module, an approval score based on a response message to the approval notification sent to the identified authorizer computer device; and
- updating the approval request based on the approval score and sending an updated approval request to the third-party computer device if the approval score previously calculated is greater than or equal to a predetermined threshold in the rule database.

The method according to the invention allows to efficiently capture opportunities from intelligible data. In particular, the method allows identifying other persons that will collaboratively perform various tasks to develop strategies to capture information (such as business opportunity) but also coordination interaction among the persons (e.g. users of the different computer devices) wherein the workflows may manage various tasks to prepare, implement and validate a project. By identifying key features in intelligible data, it eases the process of identifying and communicating project plan approval request to the right decision-makers. Furthermore, such method allows coordination of interaction, during the decision process, between decision-makers and other parties in which the decision-makers can provide key assessments that relate to the approval request, which may include ranking different factors, programs, requirements, or other information that relates to the project plan linked to the approval request. As such, decision-makers may then review the key assessments to iteratively develop and implement strategies that provide coordination interaction between parties through a dynamic workflow.

### According to other optional features of the method:

- it comprises a step of determining a decision score by comparing the security data to the required security level, by the classification module. The determination of a decision score allows to directly check if a user is entitled to propose or at least work on an approval request that goes out of its scope of work.
- a shared copy of the current project plan is stored in a database library. This allows registering a sum-up of the project plan and related documents that will be editable by authorizers or reviewers at different steps of the process.
- it comprises a reviewing treatment of the intelligible data of the current project plan, said reviewing treatment comprising a step of determining a review security level and reviewed authorizer computer device. The review treatment provides a way to ease identification of decision-makers (e.g. reviewers) based on specific level of accreditation. Particularly, the review treatment is implemented when intelligible data of the approval request does not comply with the level of security of the requestor (e.g. the third-party computer device) or when authorizers does not approve the approval request.
- the reviewing treatment further comprises a step of generating a request invitation message to reviewed authorizer computer device, said request invitation message comprising a scheduled review date and business data related to the review security level. To complete the proposal planning phase, a meeting may then be scheduled a in which the reviewers will collaboratively review and/or revise the project plan, validate and/or revise the preliminary decision, and initiate a proposal preparation phase.
- the reviewing treatment comprises a step of generating an action list editable by the third-party computer device. Such action list advantageously comprises all the points that may be treated along as part of the process of the project plan. The action list may then be edited by the proposer (the third-party computer device) to ease the reviewing process during the meeting with decision-makers.
- the reviewing treatment comprises a step of approval during which the shared copy of the current project plan is editable by the reviewed authorizer computer device. This step allows the reviewers to check, during or after a meeting, comments or make modifications to the project plan, related documents or to the action list.
- the reviewing treatment comprises a step of determining mandatory actions in the action list and sending, to the third-party computer device, said action list with determined mandatory actions. This step allows to detect points of the action list that has not been completed, or that has been changed by reviewers during the step of approval.

According to **another aspect** of the present invention, it is provided a computer program product comprising instructions which, when the program is executed by a computer, cause the computer to carry out the steps of the method according to the invention.

According to **another aspect** of the present invention, it is provided a system for automatic and secured processing of a request, said system comprising a computer device including a communication module, a classification module, a management module, a data memory a processing unit wherein said data memory is configured to store a security database and a rule database, the system being further configured to :
- Receiving, by the communication module, an approval request of a current project plan sent by a third-party computer device, said approval request encoding an identifier and intelligible data;
- identifying, by the classification module:
   - the identifier encoded in the approval request and determining related security data by comparing said identifier in the security database,
   - the intelligible data in said approval request and determining, according to predetermined rules stored in the rule database, a required security level;
- identifying an authorizer computer device, by the management module, in the security database, regarding the identifier and the intelligible data;
- generating an approval notification and sending, by the communication module, said approval notification to a computer device of the identified authorizer computer device;
- calculating, by the management module, an approval score based on a response message to the approval notification sent to the identified authorizer computer device; and
- updating the approval request based on the approval score and sending an updated approval request to the third-party computer device if the approval score previously calculated is greater than or equal to a predetermined threshold in the rule database.

### Brief description of the drawings

The foregoing and other objects, features and advantages of the present invention will become more apparent from the following detailed description when taken in conjunction with the accompanying drawings in which:
FIG. 1 is a schematic view of a system for automatic and secured processing of a request according to an embodiment of the invention.
FIG. 2 is a schematic view of a method for automatic and secured processing of a request according to an embodiment of the invention.
FIG. 3 is a schematic view of a process flow diagram of a method for automatic and secured processing of a request according to an embodiment of the invention.

Several aspects of the present invention are disclosed with reference to flow diagrams and/or block diagrams of methods, devices and computer program products according to embodiments of the invention.

On the figures, the flow diagrams and/or block diagrams show the architecture, the functionality and possible implementation of devices or systems or methods and computer program products, according to several embodiments of the invention.

For this purpose, each box in the flow diagrams or block diagrams may represent a system, a device, a module or code, which comprises several executable instructions for implementing the specified logical function(s).

In some implementations, the functions associated with the box may appear in a different order than indicated in the figures. For example, two boxes successively shown, may be executed substantially simultaneously, or boxes may sometimes be executed in the reverse order, depending on the functionality involved. Each box of flow diagrams or block diagrams and combinations of boxes in flow diagrams or block diagrams, may be implemented by special systems that perform the specified functions or actions or perform combinations of special equipment and computer instructions.

### Detailed description

By **"process", "compute** ", **"determine", "display", "extract", "compare"** or more broadly **"executable operation"** is meant, within the meaning of the invention, an action performed by a computer device or a processor unless the context indicates otherwise. In this regard, the operations relate to actions and/or processes of a data processing system, for example a computer system or an electronic computing device, which manipulates and transforms the data represented as physical (electronic) quantities in the memories of the computer system or other devices for storing, transmitting or displaying information. In particular, calculation operations are carried out by the processor of the device, the produced data are entered in a corresponding field in a data memory and this field or these fields can be returned to a user for example through a Human Machine Interface formatting such data. These operations may be based on applications or software.

The terms or expressions **"application", "software", "program code",** and **"executable code"** mean any expression, code or notation, of a set of instructions intended to cause a data processing to perform a particular function directly or indirectly (for example after a conversion operation into another code). Exemplary program codes may include, but are not limited to, a subprogram, a function, an executable application, a source code, an object code, a library and/or any other sequence of instructions designed for being performed on a computer system.

By **"processor" "data processing apparatus"** or **"treatment module"** is meant, within the meaning of the invention, at least one hardware circuit configured to perform operations according to instructions contained in a code. The hardware circuit may be an integrated circuit. Examples of a processor include, but are not limited to, a central processing unit, a graphics processor, an application-specific integrated circuit (ASIC), and a programmable logic circuit. A single processor or several other units may be used to implement the invention. In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

By **"coupled"** is meant, within the meaning of the invention, connected, directly or indirectly, with one or more intermediate elements. Two elements may be coupled mechanically, electrically or linked by a communication channel.

The expression **"human-machine interface",** within the meaning of the invention, corresponds to any element allowing a human being to communicate with a computer, in particular and without that list being exhaustive, a keyboard and means allowing in response to the commands entered on the keyboard to perform displays and optionally to select with the mouse or a touchpad items displayed on the screen. Another embodiment is a touch screen for selecting directly on the screen the elements touched by the finger or an object and optionally with the possibility of displaying a virtual keyboard.

By **"computer device",** it should be understood any device comprising a processing unit or a processor, for example in the form of a microcontroller cooperating with a data memory, possibly a program memory, said memories possibly being dissociated. The processing unit cooperates with said memories by means of internal communication bus.

In the following description, the same references are used to designate the same elements.

As the size of a firm increases in terms of personnel and business units, a firm may have more difficulty keeping itself organized in a variety of different areas. A lack of organization can hurt the company's effectiveness. One important area that may become more difficult to organize in an effective manner, as a company grows in size, is the management of its data, data treatment and data security. In particular, project proposals are highly critical confidential information that need to be reviewed but not leaked. Project proposals include both internal and external proposals, and those in both the planning stage and the implementation stage. Managing these proposals may be difficult in both the evaluation and implementation stages. It is desirable when a customer or an employee of a firm wish to initiate a project, to identify all parties that are supposed to give their approval before the project goes on. Moreover, several aspects of a project may be considered as confidential even between employees of a same firm and some employees may be authorized to deal with some kind of information while some employees may be authorized to deal with other kind of information. Thus, it is important to provide security in accessing to information linked with a project and with decision regarding said project.

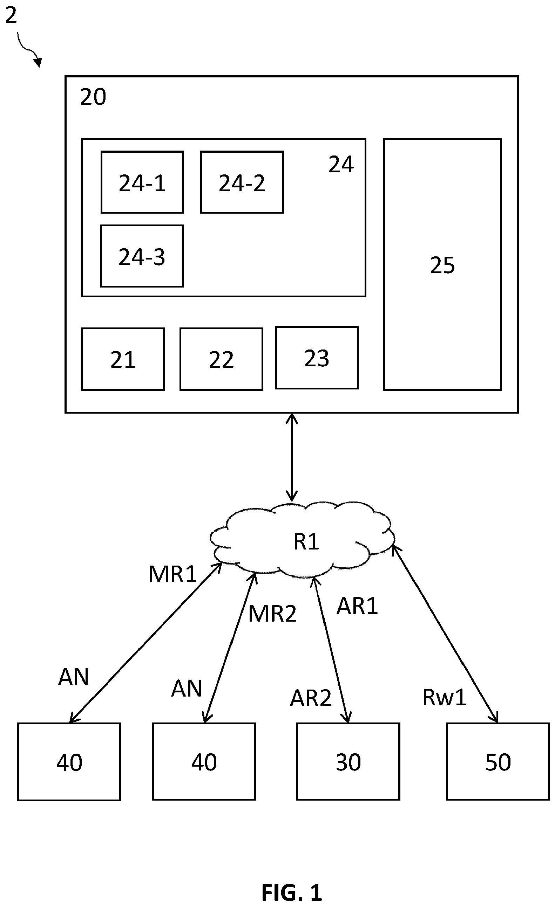

Hence, according to a **first aspect** and as illustrated in **figure 1**, the invention relates to a system for automatic and secured processing of a request 1.

According to figure 1, such system comprises a computer device 20 including a communication module 21, a classification module 22, a management module 23, a data memory 24 and a processing unit 25, wherein said data memory is configured to store a security database 24-1 and a rule database 24-2.

In the system 2, the computer device 20 includes a processing unit 25. Generally, the processing unit 25 executes instructions and manipulates data to perform the operations of the processing computer device 20.
The processing unit 25 is configured by machine readable instructions, stored on a data memory 24 in communication with said processing unit 25.

Hence, the computer device 20 of the system 2 also includes a data memory 24 configured to store a security database 24-1 and a rule database 24-2. Indeed, generally, a processing unit 25 will receive instructions and data from a read-only memory (ROM) or a random-access memory (RAM) or both. Generally, a system 2 according to the invention will also include, or be operatively coupled to one or more mass storage devices for storing data, e.g., magnetic, magneto-optical disks, or optical disks. Computer-readable media (transitory or non-transitory, as appropriate), suitable for storing machine readable instructions and data, include all forms of non-volatile memory, media and memory devices, including by way of example semiconductor memory devices, erasable programmable read-only memory (EPROM), electrically-erasable programmable read-only memory (EEPROM), and flash memory devices; magnetic disks, e.g., internal hard disks or removable disks; magneto-optical disks; and CD-ROM, DVD+/-R, DVD-RAM, and DVD-ROM disks. The data memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security, or access data, reporting files, as well as others.

More particularly, the security database 24-1 is configured to store identification data (e.g. unique identifier) of a user. For each user, identification data are coupled with security data which describes the dependency of a user to need authorizers' acceptance when generating a request of approval. The identification data also include geographical data, for example "Global Positioning System" coordinates, of the firm where the user is located.

To define the dependency of a user regarding to authorizer's acceptance need when generating a request of approval, the rule database 24-2 is further configured to associate, on the one hand, geographical data to a set of rules to apply to an approval request. Indeed, a global firm may have to deal with subsidiaries entity located in different area of a country or different country all over the world. Then, according to the location of a user's firm, actions allowed according to a required security level may differ. On the other hand, when the set of rules has been determined according to the geographical data, the required security level can be compared to said set of rules to generate a definition to apply to an approval request generated by a user.

In a preferred embodiment of a system 2 according to the invention, the data memory 24 may be configured to store a database library 24-3. The database library 24-3 comprises a shared copy of the current project plan which is linked to an approval request.
The current project plan may consist to one or more documents identified in the database library 24-3 which may be suitably accessible to a location outside a workspace and subsequently loaded into the workspace in response to users completing work to revise or otherwise work on the documents. In one implementation, in response to users suitably completing the work to revise or otherwise create the document, a document merge feature may be used to save substantial time and substantially simplify potentially cumbersome processes otherwise used to create the document. In particular, in response to the user completing the work to obtain the documents, materials, and other content associated with the current document and suitably revising the text associated therewith or other completing work on the current document, the document merge feature may be invoked to make one or more mass changes that tailor the various documents, materials, and other content selected, revised, and used in the document to the current project plan. In one implementation, all mass changes made to the document may be tracked and pulled to show context around the changes, which may enable personnel to approve or reject the changes.

In some implementations, any and/or all components of the computer device 20, both hardware and/or software, may interface with each other and/or the interface using an application programming interface (API) and/or a service layer. The API may include specifications for routines, data structures, and object classes. The API may be either computer-language independent or dependent and refer to a complete interface, a single function, or even a set of APIs. The service layer provides software services to the computer device 20. The functionality of the computer device 20 may be accessible for all client using this service layer. Software services, such as those provided by the service layer, provide reusable, defined functionalities through a defined interface. For example, the interface may be software written in JAVA, C++, or other suitable language providing data in extensible markup language (XML) format or another suitable format.
While described as an integrated component of the computer device 20 alternative implementations may illustrate the API and/or the service layer as stand-alone components in relation to other components. Moreover, any or all parts of the API and/or the service layer may be implemented as child or sub-modules of another software module, enterprise application, or hardware module without departing from the scope of this disclosure.

The processing computer device 20 communicates across a network R1 with a plurality of other computer devices such as a third-party computer device 30, identified authorizer computer device 40 or with reviewed authorizer computer device 50, over a communication module 12.

The third-party computer device 30, identified authorizer computer device 40 or reviewed authorizer computer device 50, may be any computing device operable to connect to or communicate with at least the computer system 2 using the network R1.
In general, the computer device 30, 40, 50 comprises an electronic computing device operable to receive, transmit, process, and store any appropriate data associated with the invention. The computer device 30, 40, 50 are intended to encompass any computing device such as a desktop computer, laptop/notebook computer, wireless data port, smart phone, personal data assistant (PDA), tablet computing device, one or more processors within these devices, or any other suitable processing device. For example, the computer device 30, 40, 50 may comprise a computer that includes an input device, such as a keypad, touch screen, or other device that can accept user information, and an output device that conveys information to the computer device 20, including digital data, visual and/or audio information.
Generally, the computer device 30, 40, 50 includes a processor, a client application, a data memory, and/or an interface. The client application is any type of application that allows the computer device 30, 40, 50 to navigate to/from, request, view, edit, delete, and or manipulate content on the client. In some implementations, the client application can be and/or include a web browser. In some implementations, the client-application can use parameters, metadata, and other information received at launch to access a particular set of data from the computer system.

The processing computer device 20 of the system 2 can be connected to the third-party computer device 30, identified authorizer computer device 40 or with reviewed authorizer computer device 50 by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The different computer devices of the system 2 may communicate over a network, for example, Internet Protocol (IP) packets, Frame Relay frames, Asynchronous Transfer Mode (ATM) cells, voice, video, data, and/or other suitable information between network addresses.
The present invention is described in terms of use over the Internet but may also be utilized and implemented through an intranet or some other linked computer system. Each proposal and reviewer may be linked with a central database that stores, tracks, and distributes information on the approval request.

The processing computer device 20 also include a classification module 22. The classification module 22 is configured to analyze approval requests received from third party computer devices.
For example, approval requests may include metadata fields that describe personnel names, titles, hire dates, expiration dates, projects, primary contact points, secondary contact points, proposals supported, job positions, certifications, branch offices, or other suitable personnel information such as identification data (e.g. identifier). Similarly, approval requests may comprise metadata fields that describe document names related to the approval request, titles, business units, summaries, client names, contract winners, bid numbers, proposal numbers. In addition to these information, approval request may include metadata fields that describe contract related data such as start dates, end dates, auto renewal options, categories, industries, partners, partner managers, partner websites, final approvers, future negotiation notes, a total contract value, a project margin or any other suitable information.
As such, the structured metadata may be used to describe every suitable document, proposal lifecycle task, or other data or information that relates to proposal management to map all needs that the firm may have to corresponding data abstractions or document objects.
Thus, the classification module 22 is configured to determine identification data, more particularly an identifier, in the approval request. When such an identifier has been determined, the classification module 22 determines related security data by comparing such identifier in the security database 24-1. Further to the determination of the identifier and related security data, the classification module 22 is configured to determine, based on geographical data associated with identification data, a set of rules to apply to the approval request AR1. Such set of rules are stored in the rule database 24-2 and allow to generate a definition of security conditions to comply with.
For example, a definition of security conditions to comply with may consider financial data, such as the total contract value and the project margin. For a set of rules, each required security level may be associated with a definition of security conditions including dedicated thresholds. Thresholds may define for example a total contract value beyond which the user is not entitled to deal with.
It must be noted that any kind of metadata previously described may be used to generate a definition of security.

The processing computer device 20 also include a management module 23. The management module 23 is configured to analyze approval requests received from third party computer devices.
The management module 23 is configured to identify, based on identification data of an approval request (e.g. the user identifier of an approval request) and geographical data associated with identification data, authorizers in the security database 24-1. For example, the management module 23 may be configured to determine all identification data, comprising same geographical data identified in the approval request AR1 and comprising a security level greater than the security level associated to the identifier from the approval request. Upon identifying authorizers, the management module 23 is configured to calculate a decision score. Indeed, when a user generates an approval request AR1, it has to be determined whether the user is entitled to deal with information included in the approval request AR1. For example, the management module 23 is configured to calculate a decision score based on security data related to the identifier of the user compared to a required security level, only If it has been certified, by the classification module 22, that the security data comprise a security level greater than or equal to the required security level.

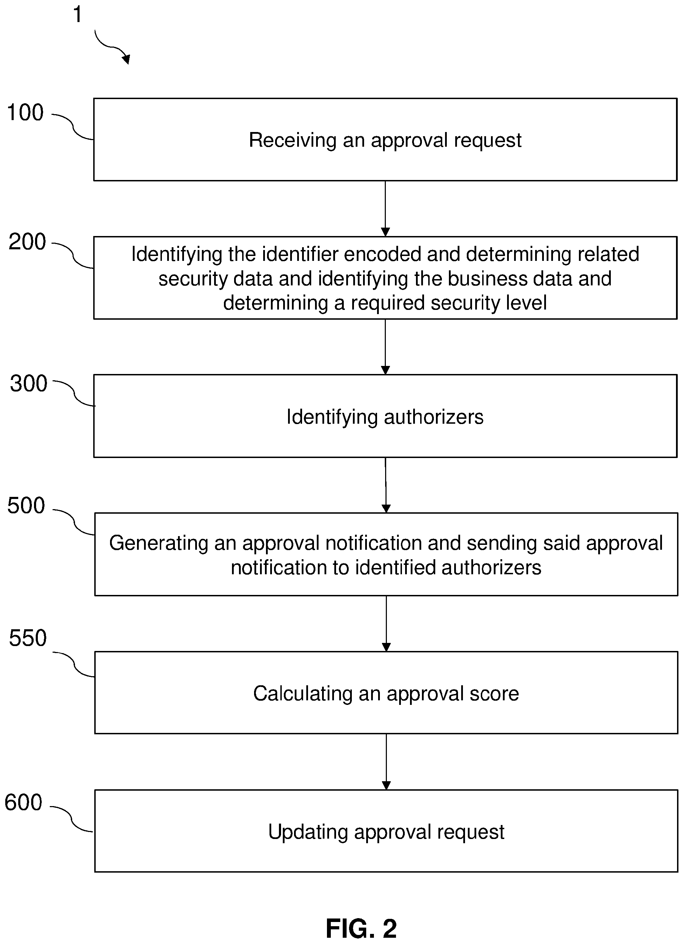

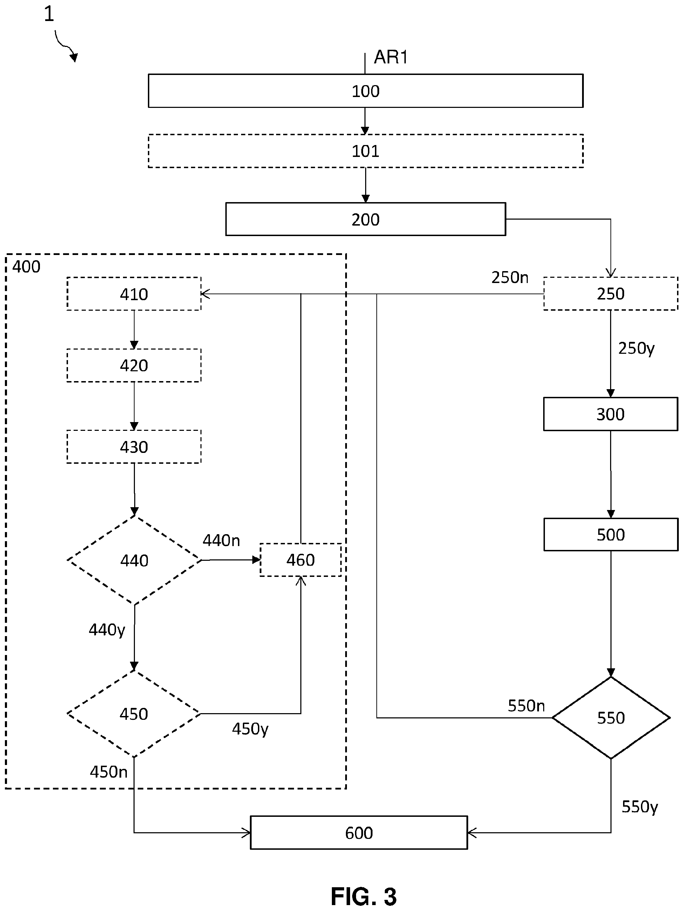

According to a **second aspect** and as illustrated in **figures 2** **and** **3****,** the invention relates to a method for automatic and secured processing of a request 1, said method comprising the steps of receiving 100 an approval request AR1, identifying 200 the identifier encoded in the approval request AR1 and determining related security data and intelligible data and determining a required security level, identifying authorizers 300 regarding the identifier, generating 500 an approval notification AN and sending said approval notification to identified authorizer computer device 40, calculating 550 an approval score and updating 600 the approval request.

As shown in figure 3, the method for automatic and secured processing of a request 1 according to the invention comprise a **step of receiving 100** an approval request AR1. The approval request AR1 is generated by a user through a third-party computer device 30 and sent to a processing computer device 20.

In particular, the approval request can correspond to a message encoding information related to a current project plan stored on a database library 24-3. Preferably, the received document also comprises human intelligible data such as technological or economic data. Intelligible data refer to data that is, as such, comprehensible by a human being.
As previously described regarding an approval request, more particularly with metadata in such approval request, the project plan may also comprise fields that describe personnel names, titles, hire dates, expiration dates, projects, primary contact points, secondary contact points, proposals supported, job positions, certifications, branch offices, or other suitable personnel information such as identification data (e.g. an identifier). Similarly, the project plan may comprise fields that describe document names related to the approval request, titles, business units, summaries, client names, contract winners, bid numbers, proposal numbers. In addition to these information, approval request may include metadata fields that describe contract related data such as start dates, end dates, auto renewal options, categories, industries, partners, partner managers, partner websites, final approvers, future negotiation notes, a total contract value, a project margin or any other suitable information.

The current project plan may take the form of an electronic document that needs the input from a plurality of user for its completion and/or approbation. A project plan according to the invention can be any type of file comprising intelligible data. For example, the approval request can be a project proposal or a term sheet comprising a plurality of intelligible data, such as data related to general aspects of the project plan encompassing a status describing the project progress, an identification number, one or more firm entities concerned by the project plan which may be indicate as parties involved in the project plan. Parties involved in the project plan may be described by full first and last names associated with a firm entity, such as a business unit, or a customer may be as such described with a full first and last name of a legal representative acting on behalf of the customer (e.g. a firm).

Moreover, the intelligible data of a project plan may comprise financial data which may be relevant to identify the right decision-makers in the context of a method according to the invention. Indeed, the financial data used to identify the decision-makers can include a project margin, a total current value of, for example, a project plan related to a contract.

The intelligible data may further comprise a starting date, for example to execute obligations related to a contract, a duration of said contract from the starting date.

As already described, the project plan may be all or part editable. The intelligible data may then comprise review data that allow other parties, such as authorizers or reviewers, to get information whether review meetings have already been organized, and, if a project plan or related documents have been modified, to identify latest version of said documents. Moreover, the intelligible data may also comprise approving data which may consist of a decision, for example "Approved" or "refused" made by one of the authorizers or reviewers whose names and a hierarchical data describing the position in the firm are indicated.

As depicted in figure 2, the method for automatic and secured processing of a request 1 according to the invention comprise a step of identifying 200 an identifier encoded in the approval request AR1. The step of identifying 200 can be processed by a processing unit 25 of the processing computer device 20. It can in particular comprise an analysis, by a classification module 22, of the approval request AR1 to identify the identifier in a dedicated data field.

Once the identifier has been identified, the method for automatic and secured processing of a request 1 also comprises a step of determining related security data by comparing said identifier in the security database 24-1. The security data may comprise a plurality of information such as a level of security that may take the form of a value, related to the identifier.

The step of identifying 200 is also configured to identify intelligible data in the approval request AR1. More particularly, the classification module 22 may be configured to identify predetermined keywords, through any suitable known natural language processing technique, in the approval request AR1. As already described, the intelligible data that may be advantageously identified may be a total current value and/or a margin profit encoded in the approval request in the form of metadata.

Further to the identification of intelligible data, the method for automatic and secured processing of a request 1 also comprises a step of determining a required security level based on intelligible data identified. The step of determining a required security level advantageously compare the identification data, more particularly an identifier or geographical data encoded in the identification data, to a rule database 24-2 to determine a set of rules to apply to the approval request AR1. The set of rules is then used to determine a required security level based on specific intelligible data. For example, a definition of security conditions to comply with may consider financial data, such as the total contract value and the project margin. For a set of rules, each required security level may be associated with a definition of security conditions including dedicated thresholds. Thresholds may define for example a total contract value beyond which the user is not entitled to deal with.

The method for automatic and secured processing of a request 1 according to the invention may comprise a step of determining 250 a decision score by comparing the security data to the required security level. In that step, the classification module 22 generates a value that may be a binary value describing a compliance between the security data and the required security level. If the security data does not comply 250n with the required security level, for example the security level is lower than the required security level, then the decision score is set to the value "0" and the step of determining 250 a decision score is followed by a reviewing treatment 400 (that will be described later in the specification) of the approval request AR1.

However, if the security data comply 250y with the required security data, for example the security level is equal or greater than the required security level, then the decision score is set to the value "1" and the step of determining 250 a decision score is followed by a step of identifying computer device authorizers 300.

The step of identifying computer device authorizers 300, is carried out by a management module 23 of the processing computer device 20. The step of identifying 300 computer device authorizers can comprise a step of selecting a plurality of users, more particularly one or more authorizer computer device 40 which are differentiated based for example on identification data of the approval request AR1 generated by the third-party computer device 30. Based on the identification data such as the identifier and/or geographical data encoded in the approval request AR1, the step of identifying computer device authorizers 300 may identify on the one hand all the users stored in the security database 24-1 presenting same geographical data of the third-party device 30 from which the approval request AR1 has been generated, and on the other hand presenting security data comprising a security level equal and/or greater than the required security level previously determined.
Indeed, based on the approval request information's and preferably on metadata associated to the approval request AR1, on the rule database 24-2, the security database 24-1 and/or on a dedicated directory comprising the potential users, the method according to the invention can select a suitable team for the approval of a request.

In other words, a method according to the invention can comprise a step of determining a suitable group of client/user identifier, such determination being preferably based on identification data comprised in the approval request AR1 and a required security level to identify decision-makers related to said identification data.

Such selection can also be based on data accumulated on previously processed approval request and their outcomes values (time of processing, percentage of agreement by parties...).

As shown in figure 3, the method for automatic and secured processing of a request 1 according to the invention comprises a step of generating 500 an approval notification AN and sending said approval notification to identified authorizer computer device 40. Once the suitable authorizer has been identified, the approval notification AN is generated and sent, by the communication module 21. The approval notification AN may comprise all or part of the approval request AR1 information and is intended to be sent directly into a mailbox of the authorizer, or through a dedicated web application. Upon sending said approval notification AN and as already described, a shared copy of the current project plan is stored in a database library 24-3. When the approval notification AN is sent to identified authorizer computer device 40, the current project plan stored in the database library 24-3 may then be accessible, and more particularly editable to said computer device authorizers.

As shown in figure 3, the method for automatic and secured processing of a request 1 according to the invention comprises a step of calculating 550 an approval score based on a response message MR1, MR2 to the approval notification AN sent to identified authorizer computer device 40.

As previously discussed, one or more may be imply in the process of approval of a request. Each of the identified authorizer computer device 40 (e.g. each user) can provide comments or modifications on related documents of the current project plan and give their approval or refusal.

The approval score can be calculated by the management module 23 of the processing computer device 20.
The decisions of the assigned authorizers may be illustrated on a separate approval page. In alternative embodiments, there may be a checklist of authorizers who must sign off on a project if the project requires certain capital or personnel investment. For each identified authorizer computer device 40 that gives their approval, a response message MR1, MR2 comprising dedicated fields identifying the user of the authorizer computer device 40 and its decision, is sent to the processing computer device 20. The set of rules to apply to the approval request AR1, which is stored in the rule database 24-2 allow to generate a definition of security conditions to comply with. In such definition of security conditions, a dedicated threshold may specify whether the request has been approved or not.
For example, for each users of identified authorizer computer device 40 that gives their approval or refusal, a response message MR1, MR2 may comprise a value such as "0" for a refusal or "1" for an approval, in the dedicated field related to the decision. Upon receiving the response message MR1, MR2, the approval score is calculated based on the value in the field related to the decision. For example, the threshold may be preconfigured to indicate that the approval request is approved 550y, if the decision score is equal or greater than a predetermined percentage of the number of the identified authorizer computer device 40.

Alternatively, individuals with veto authority may be listed on such an approval checklist. In that case, in the definition of security conditions, a dedicated rule indicating that if the response message MR1, MR2 comprises a field identifying a specific user of a authorizer computer device 40 and a value, in the dedicated decision field, such as "0" for a refusal, then the approval request AR1 is refused 550n.

In both cases, if the approval request AR1 is refused, the step of calculating 550 an approval score based on a response message MR1, MR2 is followed by a reviewing treatment 400 of the approval request AR1.

In alternative embodiments, one person may have the authority to determine the consensus on a proposal and make a final determination based on the other authorizer comments. In that case, in the definition of security conditions, a dedicated rule indicating that if the response message MR1, MR2 comprises a field identifying a specific user of a authorizer computer device 40 and a value, in the dedicated decision field, such as "1" for an approval, then the approval request AR1 is approved 550y.

As shown in figure 3, the method for automatic and secured processing of a request 1 according to the invention can comprise a step of updating 600 the approval request AR1 based on the approval score and sending an updated approval request AR2 to the third-party computer device 30. In particular, the step of updating 600 the approval request AR1 is executed by the management module 23 if the approval score previously calculated is greater than or equal to a predetermined threshold in the rule database 24-2.

Indeed, when users of authorizer computer device 40 have given their approval, the management module 23 may update the status of the approval request to "Completed" and the updated approval request AR2 is sent by the communication module 21 to the third-party computer device 30 to inform the user of said third-party computer device.

As previously described regarding to the step of determining 250 a decision score and the step of calculating 550 an approval score based, a method for automatic and secured processing of a request 1 may comprise a reviewing treatment 400 of the intelligible data of the current project plan, said reviewing treatment comprising a step of determining 410 a review security level and reviewed authorizers computer device 50.

Indeed, if security data comprise a security level lesser than a required security level or if an approval score calculated is lesser than a predetermined threshold in the rule database 24-2, it means that whether the user acting through the third-party computer device 30 does not have the rights to deal with information, more particularly intelligible data of a project plan related to an approval request AR1. It may also mean that one or more authorizer computer device 40 did not give their approval and then the approval request AR1 is refused 550n.

As described in line with the step of determining a required security level, the step of determining 410 a review security level advantageously compare the identification data of the approval request AR1, more particularly an identifier or geographical data encoded in the identification data, to a rule database 24-2 to determine a set of rules to apply to the approval request AR1. The set of rules is then used to determine a security level based on specific intelligible data. For example, a definition of security conditions to comply with may consider financial data, such as the total contract value and the project margin. For a set of rules, each security level may be associated with a definition of security conditions including dedicated thresholds. Thresholds may define for example a total contract value beyond which a reviewed authorizer computer device 50 has to give its approval.
Once the review security level has been determined, reviewed authorizer computer device 50 are determined. This step can consist of selecting a plurality of users, more particularly one or more reviewed authorizer computer device 50 which are differentiated based for example on identification data of the approval request AR1 generated by the third-party computer device 30. Based on the identification data such as the identifier and/or geographical data encoded in the approval request AR1, the step of determining computer device reviewers may identify on the one hand all the users stored in the security database 24-1 presenting same geographical data of the third-party device 30 from which the approval request AR1 has been generated, and on the other hand presenting security data comprising a security level equal to the review security level previously determined. For example, a security level can take the form of a value comprised between 1 to 6. In an embodiment of a method according to the invention, a security level value of "6" may be associated to a review security level. It must be contemplated that an authorizer computer device 40 may assume the function of a reviewed authorizer computer device 50 according to the corresponding security level and the definition to apply to an approval request.

Further to the step of determining 410 a review security level data, the method for automatic and secured processing of a request 1 the reviewing treatment 400 may also comprise a a step of generating a request invitation message 420 to reviewed authorizer computer device 50, said request invitation message comprising a scheduled review date and intelligible data related to the review security level.
To ease the organization of reviews, the rule database 24-2 may comprise reviewed rules defining a due date to plan a meeting between reviewers (e.g. users of the reviewed authorizer computer device 50) and the third party computer device 30 user. The reviewed rules may be configured to schedule a meeting within weekly "fixed time slots", the fixed time slots are calendar slots in a weekly calendar (defined by day of work week, start time expressed in time zone regarding to the geographical data and duration of time slot).

Once the request invitation message has been accepted by all parties to the meeting, the reviewing treatment 400 may comprise a step of generating an action list 430 editable by the third-party computer device 30. Such action list may take the form of questions related to the project plan that have to be answered by the user of the third-party computer device 30.

Once the action list has been completed, the reviewing treatment 400 may comprise a step of approval 440 during which the shared copy of the current project plan is editable by the reviewed authorizer computer device 50. The step of approval 440 may advantageously takes place during or after the meeting and allows to reviewed authorizer computer device 50 to comment or modify the project plan or associated documents stored in the library database 24-3. If the reviewed authorizer computer device 50 wish to reschedule 440n a meeting due to lack of information or to proceed to more amendments on the project plan or related documents, the reviewing treatment 400 may also comprise a step of rescheduling 460 a meeting, following to modifications made by the third-party computer device 30, the step of determining 410 a review security level can be executed again.

However, if the step of approval 440 is confirmed 440y, the reviewing treatment 400 may comprise a step of determining 450 mandatory actions in the action list. To that end, the rule database 24-2 may comprise definition action rule. The definition action rule allows to link one or more action to intelligible data. If the intelligible data is used to determine a required security level, then the one or more action are determined as mandatory actions in the action list.
If one or more mandatory actions in the actions list are incomplete, such as questions with no answers provided by the third-party computer device 30, the action list is sent 450y with determined mandatory actions, to the third-party computer device 30, to be completed.
Once the third-party computer device 30 has completed the mandatory actions, the reviewing treatment 400 may also comprise a step of rescheduling 460 a meeting the step of determining 410 a review security level can be executed again. If no mandatory actions in the actions list are determined 450n, the step of updating 600 the approval request AR1 is executed by the management module 23 and the updated approval request AR2 is sent to the third-party computer device 30.

As shown in figure 3, the method for automatic and secured processing of a request 1 according to the invention can comprise a facultative **step of training 101 a machine learning model or configurating rule-based algorithms.**

Machine learning is now widely adopted in various industrial fields. Learning models or Prediction models can be divided into unsupervised learning methods and supervised learning methods. The unsupervised learning methods make it possible to determine groups of observations without *a priori.* Hence, those groups will be formed without a need for a label value on input data. On the contrary, the supervised learning methods link an input to an output based on example input-output pairs.

Preferably, in the present invention, a machine learning technique is used to build a learning model, preferably a supervised learning model, configured to identify a required security level based on intelligible data. Among supervised learning methods, neural networks, classification or regression trees, nearest neighbor search, and random forest are some of the most robust and efficient machine learning techniques according to the invention.

Preferably, in the present invention, a machine learning technique is also used to build a prediction model, preferably a supervised prediction model configured to identify authorizer computer device or reviewed authorizer computer device based on intelligible data encoded in an approval request.

## Claims

1. A method for automatic and secured processing of a request (1), said method being implemented by a processing unit (25) of a processing computer device (20) including a communication module (21), a classification module (22), a management module (23), a data memory (24) wherein the data memory (24) is configured to store a security database (24-1) and a rule database (24-2), said method comprising the steps of:
- receiving (100), by the communication module (21), an approval request (AR1) of a current project plan sent by a third-party computer device (30), said approval request encoding an identifier and intelligible data;
- identifying (200), by the classification module (22):
• the identifier encoded in the approval request (AR1) and determining related security data by comparing said identifier in the security database (24-1),
• the intelligible data in said approval request and determining, according to predetermined rules stored in the rule database (24-2), a required security level;
- identifying an authorizer computer device (300), by the management module (23), in the security database (24-1), regarding the identifier and the intelligible data;
- generating (500) an approval notification (AN) and sending, by the communication module (21), said approval notification to the identified authorizer computer device (40);
- calculating (550), by the management module (23), an approval score based on a response message (MR1, MR2) to the approval notification (AN) sent to the identified authorizer computer device (40),
- updating (600) the approval request (AR1) based on the approval score and sending an updated approval request (AR2) to the third-party computer device (30) if the approval score previously calculated is greater than or equal to a predetermined threshold in the rule database (24-2).

2. The method according to claim 1, wherein said method comprises a step of determining (250) a decision score by comparing the security data to the required security level, by the classification module (22).

3. The method according to claim 1 or 2, wherein a shared copy of the current project plan is stored in a database library (24-3).

4. The method according to anyone of claims 1 to 3, said method comprising a reviewing treatment (400) of the intelligible data of the current project plan, said reviewing treatment comprising a step of determining (410) a review security level and reviewed authorizer computer device (50).

5. The method according to claim 4, wherein the reviewing treatment (400) further comprises a step of generating a request invitation message (420) to reviewed authorizer computer device (50), said request invitation message comprising a scheduled review date and business data related to the review security level.

6. The method according to claim 5, wherein the reviewing treatment (400) comprises a step of generating an action list (430) editable by the third-party computer device (30).

7. The method according to claim 6, wherein the reviewing treatment (400) comprises a step of approval (440) during which the shared copy of the current project plan is editable by the reviewed authorizer computer device (50).

8. The method according to claim 7, wherein the reviewing treatment (400) comprises a step of determining (450) mandatory actions in the action list and sending (450y), to the third-party computer device (30), said action list with determined mandatory actions.

9. A computer program product comprising instructions which, when the program is executed by a computer, cause the computer to carry out the steps of the method according to claims 1 to 8.

10. A system for automatic and secured processing of a request (2), said system comprising a computer device (20) including a communication module (21), a classification module (22), a management module (23), a data memory (24) a processing unit (25) wherein said data memory is configured to store a security database (24-1) and a rule database (24-2), the system being further configured to :
- Receiving, by the communication module (21), an approval request (AR1) of a current project plan sent by a third-party computer device (30), said approval request encoding an identifier and intelligible data;
- identifying, by the classification module (22):
• the identifier encoded in the approval request (AR1) and determining related security data by comparing said identifier in the security database (24-1),
• the intelligible data in said approval request and determining, according to predetermined rules stored in the rule database (24-2), a required security level;
- identifying an authorizer computer device (40), by the management module (23), in the security database (24-1), regarding the identifier and the intelligible data;
- generating an approval notification (AN) and sending, by the communication module (21), said approval notification to the identified authorizer computer device (40);
- calculating, by the management module (23), an approval score based on a response message (MR1, MR2) to the approval notification (AN) sent to the identified authorizer computer device (40); and
- updating the approval request (AR1) based on the approval score and sending an updated approval request (AR2) to the third-party computer device (30) if the approval score previously calculated is greater than or equal to a predetermined threshold in the rule database (24-2).
